# EUROPEAN PATENT SPECIFICATION

(11) **EP 3 138 760 B1**
(45) Date of publication and mention of the grant of the patent: **06.12.2017**
(21) Application number: 15185404.9
(22) Date of filing: 16.09.2015
(51) Int. Cl.: B62D 5/07, B62D 5/093

(54) **HYDRAULIC STEERING**
HYDRAULISCHE LENKUNG
DIRECTION HYDRAULIQUE

(30) Priority: 25.08.2015 IN 2640DE2015
(43) Date of publication of application: 08.03.2017
(73) Proprietor: Danfoss Power Solutions Aps, 6430 Nordborg (DK)
(72) Inventor: Kanbargi, Ravi, 412207 Pune (IN); Peistrup, Peter Gade, 6430 Nordborg (DK)
(74) Representative: Knoblauch, Andreas

(56) References cited:
- US-A- 4 262 580
- US-A1- 2014 298 798
- US-B2- 7 699 135

## Description

The invention relates to a hydraulic steering comprising a hydraulic steering unit and a priority valve, wherein the hydraulic steering unit and the priority valve are arranged in a common housing, and wherein the hydraulic steering comprises a hydraulic pressure supply port, a low pressure port, two steering connection ports and an excess flow port to supply an external implement, and wherein the priority valve distributes hydraulic fluid from the hydraulic pressure supply port between the hydraulic steering unit and the excess flow port.

Hydraulic steerings are used for example in heavy vehicles that are steered by a steering wheel connected to a hydraulic steering unit that translates the rotation of the steering wheel into a distribution of hydraulic fluid between two steering connection ports. However, in many cases an implement, e.g. a fork lift or a shovel arm, also needs to be supplied with hydraulic fluid in these vehicles. To this end it is known in the state of the art to use a priority valve connected to a single pump via a hydraulic pressure supply port in order to supply both the hydraulic steering unit as well as the implement with hydraulic fluid from the same pump. However, adding an additional valve increases the size and cost of the hydraulic steering. This has the disadvantage that additional fluid lines and corresponding additional points with a risk of fluid leakage are introduced.

From US 7 699 135 B2 a hydraulic steering of the kind mentioned above is known. Therein a hydraulic steering unit is combined with a priority valve in the same housing. The rotational axis of the steering valve is parallel to the stroke direction of the priority valve. A control valve for the implement is directly attached to the housing of the hydraulic steering unit and the priority valve.
While the above solution has the advantage that the number of fluid connections that need to be sealed is lowered. However, the resulting combined hydraulic steering unit and priority valve still has almost the same total size as two separate units. Moreover, these two units need to be directly attached to a large control valve which further increases the size of the hydraulic steering. Consequently, this solution is only suitable for some applications, where a long steering column and large hydraulic steering is not an issue, i.e. in a fork lift truck. Furthermore, document US 2014/0298798 A1 shows the preamble of claim 1. The task of the present invention is therefore to provide a more compact hydraulic steering that retains the advantages of a combined hydraulic steering unit and priority valve.

According to the present invention the above task is solved in that the hydraulic pressure supply port, the low pressure port and the two steering connection ports all enter on the same side of the housing, and wherein the priority valve is arranged adjacent to the four ports hydraulic pressure supply port, the low pressure port and the two steering connection ports with two of the four ports on either side of the priority valve.

In order to lower the overall size of the hydraulic steering, the priority valve is thus integrated into the same housing as the hydraulic steering unit. Four of the five hydraulic ports, namely the hydraulic pressure supply port, the low pressure port and the two steering connection ports are all arranged on the same side of the housing. In the context of this application "the four ports" denotes the hydraulic pressure supply port, the low pressure port and the left steering connection port as well as the right steering connection port. The hydraulic ports taking up a certain amount of space cannot be avoided, but arranging four of the five ports on the same side of the housing will reduce the overall dimensions of the housing. Furthermore, the priority valve is arranged between two of the ports on either side. Consequently, this allows to place the priority valve into the housing in such a way that the overall dimensions are the same as for a standalone hydraulic steering unit without an integrated priority valve. In other words the priority valve is placed into a space of the housing that would otherwise be wasted. This has the further advantage that the priority valve can be arranged with a very short flow distance to the hydraulic pressure supply port, thereby reducing pressure losses.

In a preferred embodiment the priority valve comprises a spool, wherein the direction of stroke of the spool is perpendicular to a common parallel entry direction of the four ports. With this solution the dimensions of the housing deviating from the shape of the hydraulic steering unit do not need to be too large. The priority valve can, in principle, be arranged almost tangentially to the hydraulic steering unit in the common housing. The four ports, hydraulic pressure supply port, low pressure port and the two steering connection ports can then have a common entry direction that points towards the hydraulic steering unit and the priority valve can be arranged perpendicular to this entry direction.

In a further preferred embodiment the entry direction of the excess flow port is perpendicular to a common parallel entry direction of the four ports. Preferably the excess flow port is arranged in a side of the housing adjacent to the side of the housing in which the four ports enter.

It is furthermore preferred if the priority valve at one end of the spool stroke provides hydraulic fluid from the hydraulic pressure supply port both to the hydraulic steering unit and the excess flow port. Consequently, the priority valve on one end of the spool stroke can provide both the hydraulic steering unit as well as an implement with pressurized hydraulic fluid.

It is furthermore preferred that the priority valve at the other end of the spool stroke provides hydraulic fluid from the hydraulic pressure supply port only to the hydraulic steering unit. Consequently, in this embodiment the hydraulic steering unit will always be supplied with hydraulic fluid irrespectable of the valve position of the spool in the priority valve. However, the supply of hydraulic fluid to the hydraulic steering unit can be throttled when both hydraulic steering unit and excess flow port are supplied.

It is furthermore preferred if the hydraulic steering unit comprises at least one sleeve with a rotational axis, wherein the rotational axis is perpendicular to both the common parallel entry direction of the four ports and the direction of spool stroke of the spool. This embodiment allows for a particularly compact arrangement of the hydraulic steering unit and the priority valve thereby allowing a comparatively small overall size of the housing. Alternatively, the rotational axis of the hydraulic steering unit can be parallel to the direction of the spool stroke, wherein both are perpendicular to the common entry direction of the four ports.

In a further preferred embodiment the priority valve is arranged in a through-hole of the housing. This embodiment simplifies the assembly of the hydraulic steering. Furthermore, the space required for the priority valve inside the housing can be further limited. This embodiment also removes the need for blind-honing of the bore containing the priority valve and therefore simplifies machining. At the ends of the through-hole plugs and/or connectors to additional fluid ports may be arranged.

Preferably, in at least one end of the through-hole a load-sense connector is arranged. This is particularly desirable, if the hydraulic steering is part of a high performance system, for example with variable displacement pumps.

Preferred embodiments of the invention now will be described with reference to the figures, wherein:
- Fig. 1: shows a hydraulic steering according to the invention in a hydraulic circuit diagram,
- Fig. 2: shows a hydraulic steering according to the invention from a side view,
- Fig. 3: shows a cut view of the hydraulic steering according to Fig. 2 along the plane A-A,
- Fig. 4: shows a cut view of a hydraulic steering according to Fig. 2 along the plane B-B,
- Fig. 5: shows a cut view of a hydraulic steering according to Fig. 2 along the plane C-C,
- Fig. 6: shows a top view of the hydraulic steering according to Fig. 2.
- Fig. 7: shows a cut view of the hydraulic steering according to Fig. 6 along the plane D-D, and
- Fig. 8: shows a cut view of the hydraulic steering according to Fig. 2 along the plane E-E.

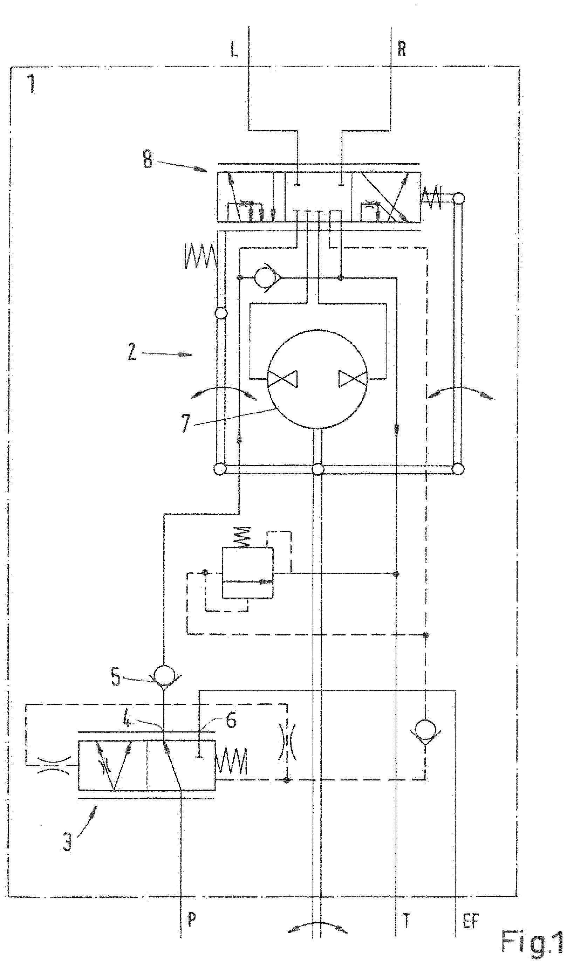

In Fig. 1 a hydraulic steering 1 according to the invention is shown in a hydraulic circuit diagram. The hydraulic steering 1 comprises a hydraulic steering unit 2 as well as a priority valve 3.

The hydraulic steering 1 is supplied with pressurized hydraulic fluid via a hydraulic pressure supply port P. From the hydraulic pressure supply port P the hydraulic fluid flows to the priority valve 3. The priority valve 3 preferably is a proportional three way valve. A first priority outlet 4 connects the priority valve 3 to the hydraulic steering unit 2 via a non-return valve 5. A second priority outlet 6 leads from the priority valve 3 to an excess flow port EF. The excess flow port EF can be connected to an implement external to the hydraulic steering 1.

The priority valve 3 at one end of the valve element stroke or spool stroke provides hydraulic fluid from the hydraulic pressure supply port P both to the hydraulic steering unit 2 and the excess flow port EF as depicted by the left valve position in Fig. 1. At the other end of the valve element stroke or spool stroke the priority valve 3 provides hydraulic fluid from the hydraulic pressure supply port P only to the hydraulic steering unit 2 as shown in the right valve position in Fig. 1.

The hydraulic steering unit 2 comprises a measuring motor 7 that is connected to a steering wheel (not shown). The hydraulic steering unit 2 furthermore comprises a directional valve 8, which is here simplified displayed by having three different valve positions. The three valve positions are the neutral positon as shown, and two directional positions offset from the neutral position. However, in reality the directional valve 8 will usually have two mutually rotatable valve sleeves, which can be rotatably supported in a housing. One of these sleeves can then be connected to a steering wheel, while the other sleeve can be connected to the measuring motor 7.

The directional valve 8 here in the left valve position provides the left steering connection port L with pressurized hydraulic fluid, while in the right position the right steering connection port is provided with pressurized hydraulic fluid coming from the priority valve 3. In each case the opposite port L, R is connected to the low pressure port T.

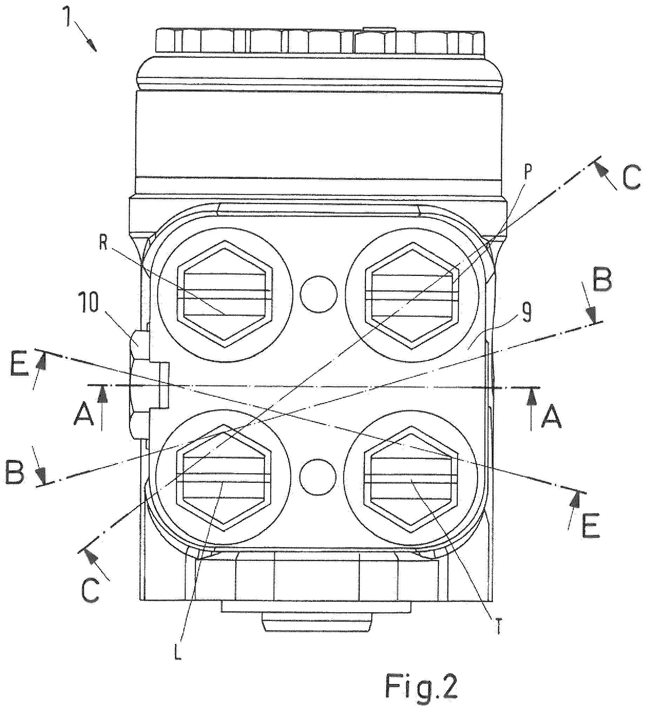

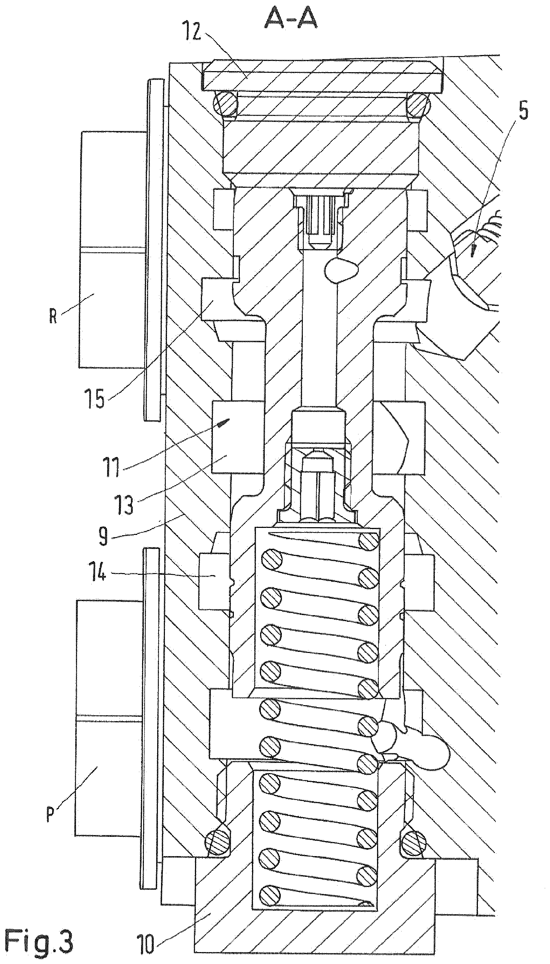

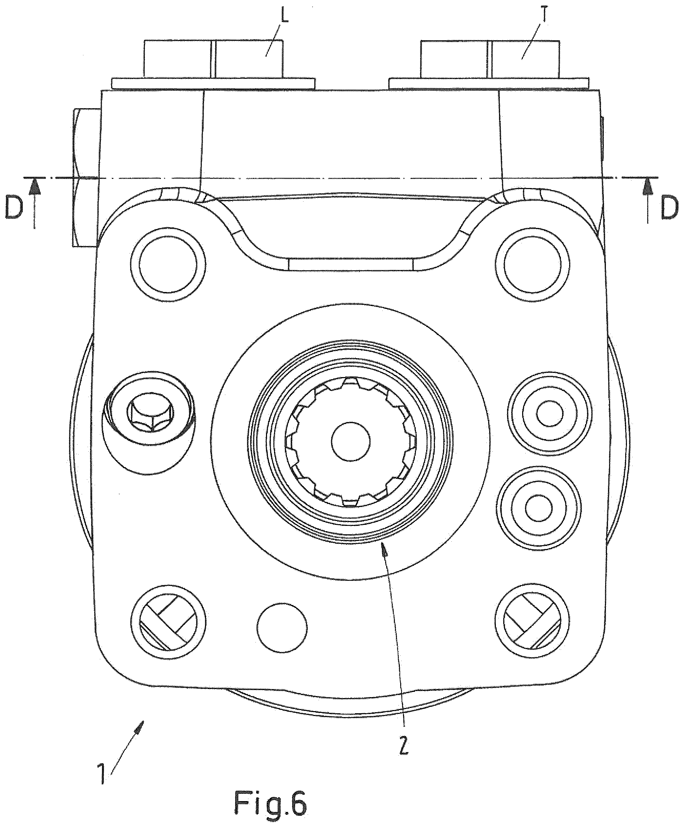

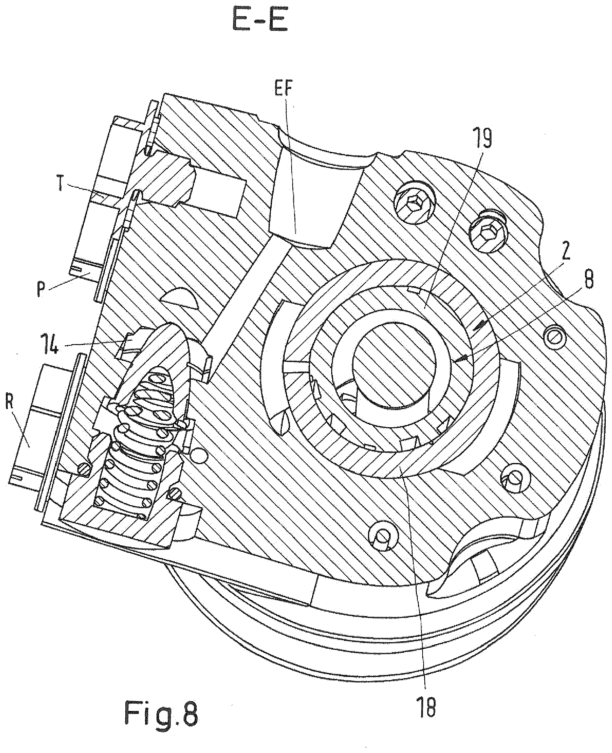

Fig. 2 to 8 show a preferred embodiment of a hydraulic steering 1 according to the invention. The hydraulic steering 1 comprising the hydraulic steering unit 2 and the priority valve 3 are arranged in a common housing 9. Fig. 2 and 6 show outside views of the housing 9, while Fig. 3 to 5 and 7 to 8 show different cut views of the housing 9, the hydraulic steering unit 2 as well as the priority valve 3.

Fig. 2 shows a side view of the housing 9 in which the hydraulic pressure supply port P, the low pressure port T as well as the left and right steering connection ports L, R are arranged. One can also see a first plug 10 of the priority valve 3.

Fig. 3 shows a first cut view along the plane A-A in Fig. 2. The priority valve 3 is arranged in a through-hole 11 of the housing 9. On both ends of the through-hole 11 plugs 10, 12 are arranged to seal the priority valve 3 to the outside. Alternatively, in at least one end of the through-hole a load-sense connector may be arranged. This is in particular desirable in high performance systems with variable displacement pumps.

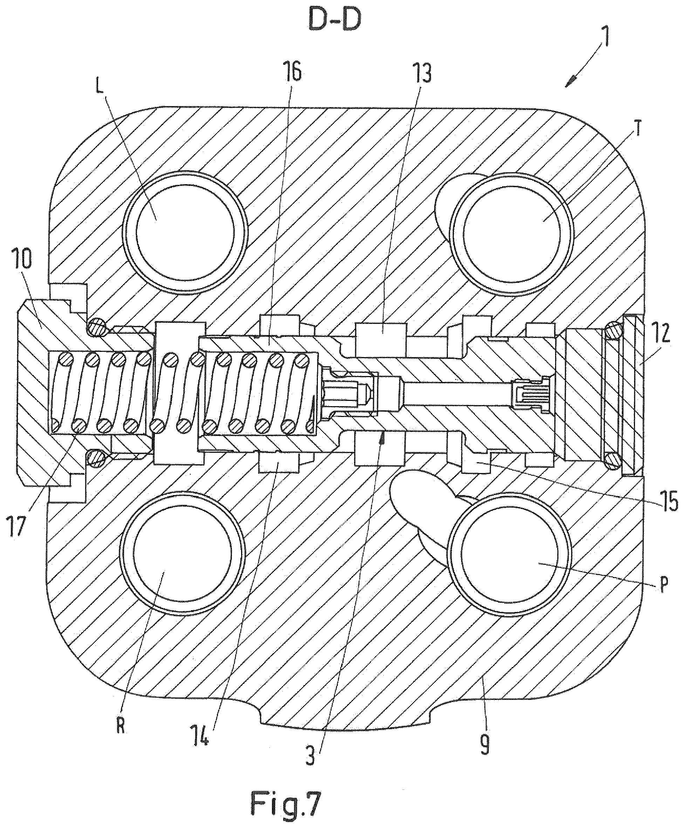

In Fig. 3 one can only see a side view of the hydraulic pressure supply port P and the right steering connection port R. A comparison of Fig. 2 and 3 clearly shows the solution according to the invention, whereby the priority valve is arranged adjacent to the four ports hydraulic pressure supply port P, the low pressure port T and the two steering connection ports L, R with two of the four ports P, T, L, R on either side of the priority valve 3. This can also be seen in Fig. 7, which shows a cut through the priority valve 3 as well as the four ports P, T, R, L.

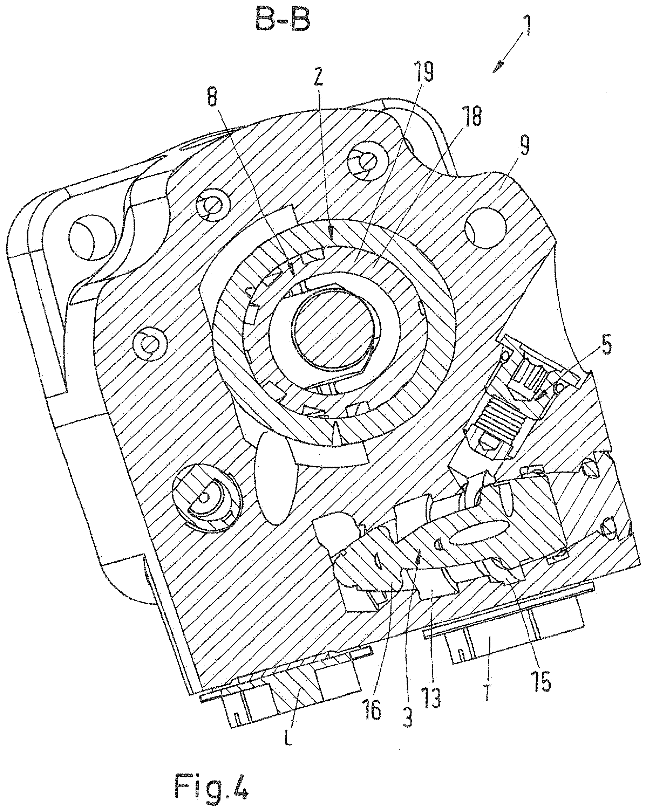

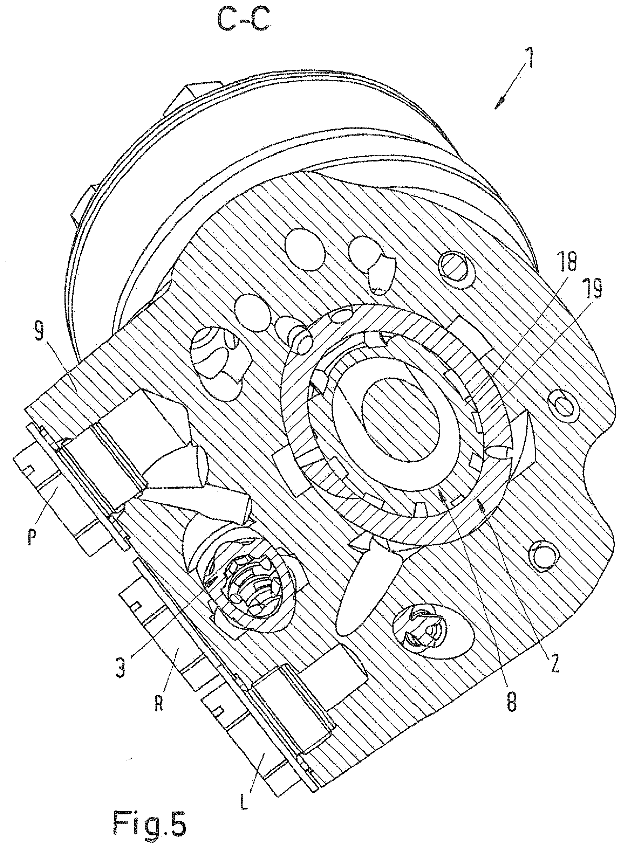

The priority valve 3 furthermore comprises an entry chamber 13, an excess flow chamber 14 and a steering chamber 15. The priority valve 3 also comprises a spool 16 which is urged towards a first valve position by a spring 17. In the depicted valve position in Fig. 3 and 7 the flow of hydraulic fluid to the excess flow port EF is blocked by the spool 16. At the same time a flow of pressurized hydraulic fluid from the entry chamber 13 to the steering chamber 15 is permitted. From the steering chamber 15 the pressurized hydraulic fluid passes the non-return valve 5 as can be seen in Fig. 3 and 4. After passing the non-return valve 5 the pressurized hydraulic fluid reaches the hydraulic steering unit 2 comprising the directional valve 8. The directional valve 8 can be seen in the cut views of Fig. 4 and 5 comprising a set of sleeves 18, 19 that can be rotated relative to one another.

The solution according to the invention consequently allows for a more compact hydraulic steering with a combined hydraulic steering unit and priority valve in the same housing.

## Claims

1. A hydraulic steering (1) comprising a hydraulic steering unit (2) and a priority valve (3), wherein the hydraulic steering unit (2) and the priority valve (3) are arranged in a common housing (9), and wherein the hydraulic steering (1) comprises a hydraulic pressure supply port (P), a low pressure port (T), two steering connection ports (L, R) and an excess flow port (EF) to supply an external implement, and wherein the priority valve (3) distributes hydraulic fluid from the hydraulic pressure supply port (P) between the hydraulic steering unit (2) and the excess flow port (EF), **characterized in that**, the hydraulic pressure supply port (P), the low pressure port (T) and the two steering connection ports (L, R) all enter on the same side of the housing (9), and wherein the priority valve (3) is arranged adjacent to the four ports hydraulic pressure supply port (P), the low pressure port (T) and the two steering connection ports (L, R) with two of the four ports (P, T, L, R) on either side of the priority valve (3).

2. The hydraulic steering according to claim 1, **characterized in that**, the priority valve (3) comprises a spool (16), wherein the direction of the spool stroke is perpendicular to a common parallel entry direction of the four ports (P, T, L, R).

3. The hydraulic steering according to claim 1 or 2, **characterized in that**, the entry direction of the excess flow port (EF) is perpendicular to a common parallel entry direction of the four ports (P, T, L, R).

4. The hydraulic steering according to claim 2 or 3, **characterized in that**, the priority valve (3) at one end of the spool stroke provides hydraulic fluid from the hydraulic pressure supply port (P) both to the hydraulic steering unit (2) and the excess flow port (EF).

5. The hydraulic steering according to claim 4, **characterized in that**, the priority valve (3) at the other end of the spool stroke provides hydraulic fluid from the hydraulic pressure supply port (P) only to the hydraulic steering unit (2).

6. The hydraulic steering according to any of claims 2 to 5, **characterized in that**, the hydraulic steering unit (2) comprises at least one sleeve (18, 19) with a rotational axis, wherein the rotational axis is perpendicular to both the common parallel entry direction of the four ports (P, T, L, R) and the direction of the spool stroke of the spool (16).

7. The hydraulic steering according to any of claims 1 to 6, **characterized in that**, the priority valve (3) is arranged in a through-hole (11) of the housing (9).

8. The hydraulic steering according to claim 7, **characterized in that**, in at least one end of the through-hole (11) a load-sense connector is arranged.

## Patentansprüche

1. Hydraulische Lenkung (1), die eine hydraulische Lenkeinheit (2) und ein Prioritätsventil (3) umfasst, wobei die hydraulische Lenkeinheit (2) und das Prioritätsventil (3) in einem gemeinsamen Gehäuse (9) angeordnet sind und wobei die hydraulische Lenkung (1) einen Hydraulikdruckversorgungsanschluss (P), einen Niederdruckanschluss (T), zwei Lenkanschlüsse (L, R) und einen Überschussstromanschluss (EF) zum Versorgen eines externen Anbaugeräts umfasst, und wobei das Prioritätsventil (3) Hydraulikflüssigkeit von dem Hydraulikdruckversorgungsanschluss (P) zwischen der hydraulischen Lenkeinheit (2) und dem Überschussstromanschluss (EF) verteilt, **dadurch gekennzeichnet, dass** der Hydraulikdruckversorgungsanschluss (P), der Niederdruckanschluss (T) und die beiden Lenkanschlüsse (L, R) alle auf ein und derselben Seite in das Gehäuse (9) eingeführt werden, und wobei das Prioritätsventil (3) angrenzend an die vier Anschlüsse Hydraulikdruckversorgungsanschluss (P), Niederdruckanschluss (T) und die beiden Lenkanschlüsse (L, R) angeordnet ist, wobei sich zwei der vier Anschlüsse (P, T, L, R) auf jeder Seite des Prioritätsventils (3) befinden.

2. Hydraulische Lenkung nach Anspruch 1, **dadurch gekennzeichnet, dass** das Prioritätsventil (3) einen Steuerschieber (16) umfasst, wobei die Richtung des Steuerschieberhubs senkrecht zu einer gemeinsamen parallelen Einführrichtung der vier Anschlüsse (P, T, L, R) verläuft.

3. Hydraulische Lenkung nach Anspruch 1 oder 2, **dadurch gekennzeichnet, dass** die Einführrichtung des Überschussstromanschlusses (EF) senkrecht zu einer gemeinsamen parallelen Einführrichtung der vier Anschlüsse (P, T, L, R) verläuft.

4. Hydraulische Lenkung nach Anspruch 2 oder 3, **dadurch gekennzeichnet, dass** das Prioritätsventil (3) an einem Ende des Steuerschieberhubs sowohl der hydraulischen Lenkeinheit (2) als auch dem Überschussstromanschluss (EF) Hydraulikflüssigkeit vom Hydraulikdruckversorgungsanschluss (P) liefert.

5. Hydraulische Lenkung nach Anspruch 4, **dadurch gekennzeichnet, dass** das Prioritätsventil (3) am anderen Ende des Steuerschieberhubs ausschließlich der hydraulischen Lenkeinheit (2) Hydraulikflüssigkeit vom Hydraulikdruckversorgungsanschluss (P) liefert.

6. Hydraulische Lenkung nach einem der Ansprüche 2 bis 5, **dadurch gekennzeichnet, dass** die hydraulische Lenkeinheit (2) mindestens eine Hülse (18, 19) mit einer Rotationsachse umfasst, wobei die Rotationsachse senkrecht sowohl zur gemeinsamen parallelen Einführrichtung der vier Anschlüsse (P, T, L, R) als auch zur Richtung des Steuerschieberhubs des Steuerschiebers (16) verläuft.

7. Hydraulische Lenkung nach einem der Ansprüche 1 bis 6, **dadurch gekennzeichnet, dass** das Prioritätsventil (3) in einer Durchgangsbohrung (11) des Gehäuses (9) angeordnet ist.

8. Hydraulische Lenkung nach Anspruch 7, **dadurch gekennzeichnet, dass** in zumindest einem Ende der Durchgangsbohrung (11) ein Lastdruck-Melde-Anschluss angeordnet ist.

## Revendications

1. Direction hydraulique (1) comprenant une unité de direction hydraulique (2) et une soupape prioritaire (3), l'unité de direction hydraulique (2) et la soupape prioritaire (3) étant disposées dans un boîtier commun (9), et la direction hydraulique (1) comprenant un orifice d'alimentation en pression hydraulique (P), un orifice basse pression (T), deux orifices de connexion de direction (L, R) et un orifice d'écoulement en excès (EF) pour alimenter un appareil extérieur, et la soupape prioritaire (3) distribuant du fluide hydraulique depuis l'orifice d'alimentation en pression hydraulique (P) entre l'unité de direction hydraulique (2) et l'orifice d'écoulement en excès (EF), **caractérisée en ce que** l'orifice d'alimentation en pression hydraulique (P), l'orifice basse pression (T) et les deux orifices de connexion de direction (L, R) entrent tous du même côté du boîtier (9), et la soupape prioritaire (3) étant disposée en position adjacente aux quatre orifices orifice d'alimentation en pression hydraulique (P), l'orifice basse pression (T) et les deux orifices de connexion de direction (L, R), deux des quatre orifices (P, T, L, R) étant disposés de chaque côté de la soupape prioritaire (3).

2. Direction hydraulique selon la revendication 1, **caractérisée en ce que** la soupape prioritaire (3) comprend un tiroir (16), la direction de la course du tiroir étant perpendiculaire à une direction d'entrée parallèle commune des quatre orifices (P, T, L, R).

3. Direction hydraulique selon la revendication 1 ou 2, **caractérisée en ce que** la direction d'entrée de l'orifice d'écoulement en excès (EF) est perpendiculaire à une direction d'entrée parallèle commune des quatre orifices (P, T, L, R).

4. Direction hydraulique selon la revendication 2 ou 3, **caractérisée en ce que** la soupape prioritaire (3), à une extrémité de la course du tiroir, fournit du fluide hydraulique provenant de l'orifice d'alimentation en pression hydraulique (P) à la fois à l'unité de de direction hydraulique (2) et à l'orifice d'écoulement en excès (EF).

5. Direction hydraulique selon la revendication 4, **caractérisée en ce que** la soupape prioritaire (3), à l'autre extrémité de la course du tiroir, fournit du fluide hydraulique provenant de l'orifice d'alimentation en pression hydraulique (P) uniquement à l'unité de direction hydraulique (2).

6. Direction hydraulique selon l'une quelconque des revendications 2 à 5, **caractérisée en ce que** l'unité de direction hydraulique (2) comprend au moins un manchon (18, 19) avec un axe de rotation, l'axe de rotation étant perpendiculaire à la fois à la direction d'entrée parallèle commune des quatre orifices (P, T, L, R) et à la direction de la course du tiroir (16).

7. Direction hydraulique selon l'une quelconque des revendications 1 à 6, **caractérisée en ce que** la soupape prioritaire (3) est disposée dans un trou traversant (11) du boîtier (9).

8. Direction hydraulique selon la revendication 7, **caractérisée en ce que** dans au moins une extrémité du trou traversant (11) est disposé un connecteur à détection de charge.
